# EUROPEAN PATENT APPLICATION

(11) **EP 2 096 141 A1**
(43) Date of publication of application: **02.09.2009**
(21) Application number: 07859655.8
(22) Date of filing: 21.12.2007
(51) Int. Cl.: C08L 67/04, B65D 1/00, C08J 9/04, C08K 5/101, C08K 5/1515, C08L 101/16

(54) **BIODEGRADABLE POLYESTER RESIN COMPOSITION, AND MOLDED BODY, FOAMED BODY AND MOLDED CONTAINER OBTAINED FROM THE BIODEGRADABLE POLYESTER RESIN COMPOSITION**

(30) Priority: 22.12.2006 JP 2006346025; 22.12.2006 JP 2006346026
(71) Applicant: UNITIKA LTD., Amagasaki-shi, Hyogo 660-0824 (JP)
(72) Inventor: MATSUOKA, Fumio, Kyoto 611-0021 (JP); UEDA, Kazue, Kyoto 611-0021 (JP); OOGI, Yutaka, Kyoto 611-0021 (JP)
(74) Representative: Pautex Schneider, Nicole Véronique
(86) International application number: PCT/JP2007/001451
(87) International publication number: WO 2008/078413

(57) **Abstract**

Disclosed is a biodegradable polyester resin composition which is obtained by melt-kneading 100 parts by mass of a biodegradable polyester resin (A) containing 70 mol% or more of an α- and/or a β-hydroxycarboxylic acid unit, 3 to 30 parts by mass of a polyether/olefin block copolymer resin or a polyether ester amide copolymer resin (B), 0.01 to 10 parts by mass of a (meth)acrylic acid ester compound (C) having in the molecule thereof two or more (meth)acrylic groups, or alternatively one or more (meth)acrylic groups and one or more glycidyl or vinyl groups, and 0.01 to 10 parts by mass of a peroxide (D).

## Description

### Technical Field

The present invention relates to a biodegradable polyester resin composition, and a molded body, a foamed body and a molded container obtained from the biodegradable polyester resin composition.

### Background Art

Polylactic acid, which is a biodegradable polyester resin composition, is characterized by being higher in melting point than and superior in heat resistance to other biodegradable polyester resins. At the same time, however, polylactic acid is low in melt viscosity, for example, in such a way that when extrusion foaming molding is applied, foam breaking is caused and consequently no sufficient expansion ratio is attained as the case may be, or drawdown is caused to inhibit molding as the case may be. Additionally, polylactic acid has a drawback of being extremely brittle from the viewpoint of physical properties thereof. Therefore, for the purpose of putting polylactic acid into practical use, improvement of the melt tension, development of the strain hardening property at the time of elongation viscosity measurement and improvement of the crystallization speed are required, and additionally, improvement of the brittleness is essential. Further, biodegradable polyesters including polylactic acid are slow in crystallization speed, and hence have a drawback of being unsatisfactory in operability in various types of molding processes.

For the purpose of developing strain hardening property in a resin, generally accepted as effective are a method in which a high polymerization degree polymer is added and a method in which a polymer having a long chain branch is used. However, in the production of a high polymerization degree polymer, the polymerization takes a long time to degrade the production efficiency, and moreover, due to the long-time heat history, coloration, decomposition or the like is observed to occur in the resin. Accordingly, for example, no biodegradable polyesters having a molecular weight of 500,000 or more have yet been put into practical use. On the other hand, as a method for producing a branched polylactic acid, a method in which a multifunctional initiator is added at the time of polymerization is known (JP10-7778 A, JP2000-136256 A). However, the introduction of the branched chain at the time of polymerization offers a problem that the dispensing of the resin may be disturbed, or the optional alteration of the branching degree may be precluded.

On the other hand, a method in which a biodegradable polyester resin is prepared and then crosslinking is created by melt-kneading with a peroxide, a reactive compound or the like has undergone a large number of studies from the viewpoint that such a method is easy and simple and enables to optionally alter the branching degree. However, the acid anhydride and the polycarboxylic acid described in JP11-60928 A are not practical because the reactivity tends to undergo unevenness and additionally pressure reduction is required at the time of reaction. The methods described in JP6-49235 A and JP2000-17037 A, using a polyisocyanate, tend to decrease the molecular weight at the time of remelting and offer problems related to the safety at the time of operation or like problems; thus, no techniques reaching practical levels have yet been established.

The present inventors have proposed a biodegradable polyester resin composition using a biodegradable polyester resin such as polylactic acid, being excellent in mechanical strength and heat resistance, and having rheological properties advantageous for foaming molding, and a foamed body and a molded container using the same (JP2003-128901 A, JP2004-217288 A). However, these methods enable to improve the melt tension and crystallization speed and to impart heat resistance, but have not yet attain sufficient improvement of the brittleness.

Further, it may be thought of the addition of another resin as an improvement of the brittleness of a highly heat resistant biodegradable polyester resin that contains an α- and/or a β-hydroxycarboxylic acid unit as the main component thereof. However, such two resins lack compatibility with each other to make it difficult to carry out uniform molding, and thus, no such methods permitting stable operation have been proposed yet.

### Disclosure of the Invention

The present invention intends to solve the above-described problems, and intends the provision of a biodegradable polyester resin composition having heat resistance, being excellent in mechanical strength, in particular, impact resistance and toughness, being free from problems with respect to operability and having rheological properties advantageous for molding of foamed bodies or the like, and a molded body, a foamed body and a molded container obtained from the biodegradable polyester resin composition.

The present inventors have continuously made a diligent study for the purpose of solving the above-described problems, and consequently have reached the present invention by discovering that the above-described problems can be solved by a specific resin composition obtained by melt-kneading a biodegradable polyester resin, a polyether/olefin block copolymer resin or a polyether ester amide copolymer resin, a (meth)acrylic acid ester compound and a peroxide.

The subject matter of the present invention is as follows.

(1) A biodegradable polyester resin composition obtained by melt-kneading 100 parts by mass of a biodegradable polyester resin (A) containing 70 mol% or more of an α- and/or a β-hydroxycarboxylic acid unit, 3 to 30 parts by mass of a polyether/olefin block copolymer resin or a polyether ester amide copolymer resin (B), 0.01 to 10 parts by mass of a (meth)acrylic acid ester compound (C) having in the molecule thereof two or more (meth)acrylic groups, or alternatively one or more (meth)acrylic groups and one or more glycidyl or vinyl groups, and 0.01 to 10 parts by mass of a peroxide (D).

(2) The biodegradable polyester resin composition according to (1), wherein the α- and/or the β-hydroxycarboxylic acid unit is D-lactic acid, L-lactic acid or a mixture of these.

(3) The biodegradable polyester resin composition according to (1) or (2), wherein the polyether/olefin block copolymer resin or the polyether ester amide copolymer resin (B) is dispersed in island-like shapes and the sizes thereof are less than 1 µm.

(4) The biodegradable polyester resin composition according to any one of (1) to (3), wherein the impact strength thereof is 20 cm or more.

(5) A biodegradable polyester molded body produced by molding the biodegradable polyester resin composition according to any one of the above-described (1) to (4).

(6) A biodegradable polyester foamed body produced by foaming molding the biodegradable polyester resin composition according to any one of the above-described (1) to (4).

(7) The biodegradable polyester foamed body according to (6), wherein the impact strength thereof is 10 cm or more and the tear strength thereof is 350 N/cm or more.

(8) A biodegradable polyester molded container produced by molding the biodegradable polyester foamed body according to the above-described (6) or (7).

According to the present invention, a biodegradable polyester resin composition being excellent in mechanical strength, in particular, impact resistance, toughness and heat resistance, and having rheological properties advantageous for molding of foamed bodies or the like can be produced easily and simply at a low cost. Further, according to the present invention, by using this resin composition, a molded body, a foamed body excellent in foamability and a molded container can be provided.

### Brief Description of the Drawings

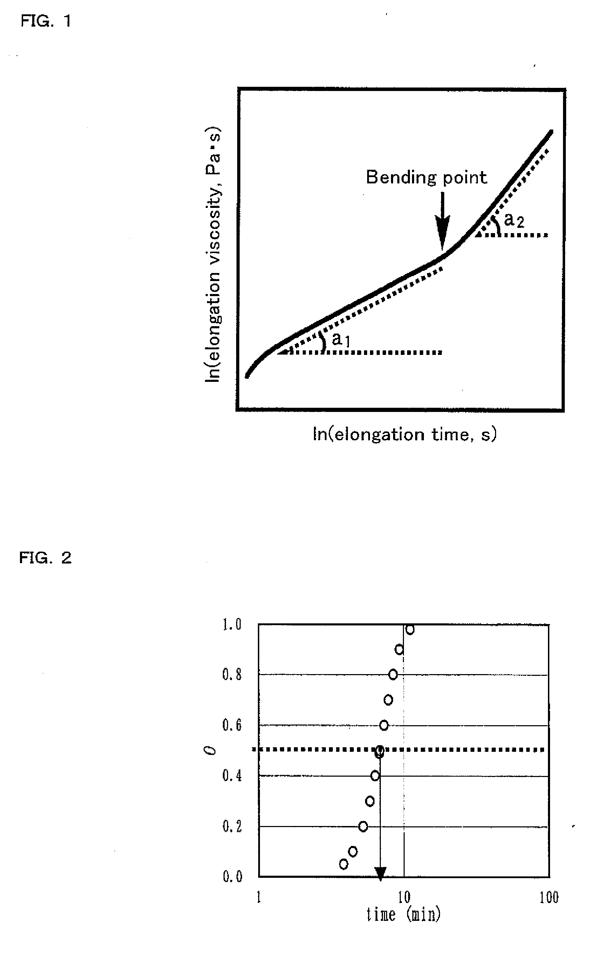

FIG. 1 is a graph showing the relation between the elongation time and the elongation viscosity in the evaluation of the ratio (a2/a1; strain hardening coefficient) between the slope a1 in the initial elongation stage linear region prior to the occurrence of a bending point and the slope a2 in the later elongation stage beyond the bending point; and
FIG. 2 is a graph showing the relation between the degree of crystallinity (θ) and the time in the evaluation of the crystallization speed index represented by the time (min) elapsed to reach half the finally reached value of the degree of crystallinity (θ).

### Best Mode for Carrying Out the Invention

Hereinafter, the present invention is described in detail.

The biodegradable polyester resin composition of the present invention is a composition obtained by melt-kneading a biodegradable polyester resin (A) containing 70 mol% or more of an α- and/or a β-hydroxycarboxylic acid unit, a polyether/olefin block copolymer resin or a polyether ester amide copolymer resin (B), a (meth)acrylic acid ester compound (C) and a peroxide (D).

Examples of the α- and/or the β-hydroxycarboxylic acid unit in the biodegradable polyester resin (A) include D-lactic acid, L-lactic acid, glycolic acid, 3-hydroxybutyric acid, 3-hydroxyvaleric acid and 3-hydroxycaproic acid. The α- and/or the β-hydroxycarboxylic acid unit may be mixtures of these.

Accordingly, examples of the biodegradable polyester resin (A) used in the present invention include poly(D-and/or L-lactic acid), poly(glycolic acid), poly(3-hydroxybutyric acid), poly(3-hydroxyvaleric acid), poly(3-hydroxycaproic acid), copolymers of these, and mixtures of these. From the viewpoint of the heat resistance and mechanical strength of the molded body, the melting point of the biodegradable polyester resin (A) is preferably 120°C or higher and more preferably 150°C or higher. From the same reasons, the content of the α- and/or the β-hydroxycarboxylic acid unit is required to be 70 mol% or more and is preferably 80 mol% or more. Among the above-described biodegradable polyester resins, poly(D- and/or L-lactic acid) is preferably used because the mass-production thereof is industrially practicable.

The biodegradable polyester resin (A) is usually produced by using a known melt polymerization method, or alternatively by additionally using a solid phase polymerization method in combination. Poly(3-hydroxybutyric acid), poly(3-hydroxyvaleric acid) and the like can also be microbially produced.

With the biodegradable polyester resin (A), other biodegradable polyester resin components may also be copolymerized or mixed, where necessary, in such an extent that the heat resistance of the poly(α- and/or β-hydroxycarboxylic acid) is not drastically impaired. Examples of the other biodegradable polyester resins include: aliphatic polyesters such as composed of a diol and a dicarboxylic acid typified by poly(ethylene succinate) and poly (butylene succinate) ; poly(ω-hydroxyalkanoate) typified by poly(ε-caprolactone); resins containing an aromatic component but exhibiting biodegradability such as poly(butylene succinate-co-butylene terephthalate) and poly(butylene adipate-co-butylene terephthalate); polyester amides; polyester carbonates; and polysaccharides such as starch.

The lactic acid polymers can be produced by polymerizing lactic acid on the basis of a known method. Examples of such a polymerization method include a method in which lactic acid is directly dehydration-condensed and a method in which a lactide, which is a cyclic dimer of lactic acid, is subjected to ring-opening polymerization to yield a lactic acid polymer. These polymerization reactions may be conducted in solvents, and the reactions may be conducted efficiently by using a catalyst and an initiator where necessary. These methods may be appropriately selected in consideration of the required molecular weight and melt flow rate.

The weight average molecular weight of the biodegradable polyester resin (A) is not particularly limited, but is preferably 50,000 to 1,000,000 and more preferably 80, 000 to 1,000,000. When the weight average molecular weight is less than 50,000, the melt viscosity of the resin composition is too low. On the other hand, when the weight average molecular weight exceeds 1,000,000, the moldability of the resin composition may be drastically degraded.

A polyether/olefin block copolymer resin (B1), which is one type of the resin (B), is a resin having a structure in which a polyolefin and a polyether are repeatedly and alternately bonded to each other through the intermediary of at least a bond selected from an ester bond, an amide bond, an ether bond, a urethane bond and an imide bond.

The polyolefin includes such polyolefins that constitute polyethylene, polypropylene, poly-4-methylpentene-1, polybutene, polyisobutylene, polycycloolefin and the like, and may be a copolymer composed of one or more olefins. Those polyolefins each made from an olefin monomer having 2 to 30 carbon atoms are preferable, those polyolefins each made from an olefin monomer having 2 to 15 carbon atoms are more preferable, and polypropylene and/or polyethylene is particularly preferable.

By introducing a carboxyl group, a hydroxyl group, an amino group or the like at a terminal of the polyolefin, the polyolefin can be block copolymerized with a polyether. Among such polyolefins, the polyolefin having a carboxyl group is preferable.

The polyether constituting the block copolymer resin (B1) has a structure represented by -(R-O)ₙ-. Examples of R include at least one structure selected from alkylenes, aliphatic hydrocarbons having branched structure, and aromatic hydrocarbons. The number of carbon atoms in R is preferably 2 to 20, and n is preferably 1 to 450. Among these, R is preferably ethylene, propylene, butylene, sec-butane, n-hexane or the like. Examples of the aromatic structure include xylylene.

Introduction of a hydroxyl group, an amino group or the like at the terminal of the polyether enables to synthesize a block copolymer.

The polyether may partially include an anionic polymer and a cationic polymer.

Examples of the anionic polymer include aliphatic dicarboxylic acids, aromatic dicarboxylic acids, and sulfonic acid alkali metal salts of 3-sulfoisophthalic acid. Particularly preferable are adipic acid, sebacic acid, terephthalic acid, isophthalic acid and sulfonic acid sodium salt of 3-sulfoisophthalic acid.

Examples of the cationic polymer may include polymers having a quaternary ammonium salt or a phosphonium salt, and additionally, polymers having a halogen ion (for example, F⁻, Cl⁻, Br⁻, or I⁻), OH⁻, PO₄⁻, CH₃OSO₄⁻, C₂H₅OSO₄⁻, ClO₄⁻ or the like.

The block copolymer resin (B1) may have a third component in the structure thereof through block copolymerization, in addition to polyolefin and polyether. For example, the block copolymer resin (B1) may be a ternary block copolymer obtained by reacting one or more compounds selected from an aminocarboxylic acid, a lactam, a diamine compound, a dicarboxylic acid compound, an isocyanate compound, an epoxy compound and the like with a polyolefin and a polyether.

Examples of the aminocarboxylic acid may include aminocarboxylic acids having 6 to 12 carbon atoms such as ω-aminocaproic acid, ω-aminoenanthic acid, 11-aminoundecanoic acid and 12-aminododecanoic acid.

Examples of the lactam may include lactams having 6 to 12 carbon atoms such as caprolactam and laurolactam.

Examples of the diamine may include: aliphatic diamines having 2 to 20 carbon atoms (such as ethylene diamine, propylenediamine, hexamethylenediamine and 1,12-dodecanediamine), alicyclic diamines having 6 to 15 carbon atoms (such as 1,4-cyclohexylenediamine and isophoronediamine), aromatic-aliphatic diamines having 8 to 15 carbon atoms (such as xylylenediamine) and aromatic diamines having 6 to 15 carbon atoms (such as p-phenylenediamine).

Examples of the dicarboxylic acid include dicarboxylic acids having 4 to 20 carbon atoms which contain aliphatic dicarboxylic acids such as succinic acid, glutaric acid, adipic acid, sebacic acid and dodecanedioic acid; terephthalic acid; isophthalic acid; naphthalene-dicarboxylic acid; 1,4-cyclohexanedicarboxylic acid and the like.

Examples of the isocyanate compound include aromatic diisocyanates having 6 to 20 carbon atoms (exclusive of the carbon atoms in the NCO group; hereinafter, ditto), aliphatic diisocyanates having 2 to 18 carbon atoms, alicyclic diisocyanates having 4 to 15 carbon atoms, aromatic-aliphatic diisocyanates having 8 to 15 carbon atoms, modified products of these diisocyanates, and mixtures of two or more of these. Specific examples of the isocyanate include phenylene diisocyanate, tolylene diisocyanate (TDI), diphenylmethane diisocyanate (MDI), naphthylene diisocyanate, ethylene diisocyanate, hexamethylene diisocyanate (HDI), isophorone diisocyanate (IPDI) and xylylene diisocyanate (XDI). Among these, preferable are TDI, MDI and HDI, and particularly preferable is HDI.

Specific examples of the epoxy compound include N-glycidyl phthalimide, butyl glycidyl ether, methacrylic acid glycidyl ether, ethylene oxide, propylene oxide, ethylene glycol diglycidyl ether and polypropylene glycol diglycidyl ether.

Therefore, in the block copolymer resin (B1), the polyolefin and the polyether are linked to each other with a structure such as ester, ether, ester amide, ether amide imide, ether ester, ether amide or ether urethane.

Specific examples of the polyether/olefin block copolymer resin (B1) applicable to the present invention may include Pelestat 230 manufactured by Sanyo Chemical Industries, Ltd., which is known as a high molecular antistatic agent.

A polyether ester amide copolymer resin (B2), which is another type of the resin (B), is a resin having an ether bond and an ester amide bond in the molecule thereof. Examples of the polyether ester amide copolymer resin (B2) may include a copolymer resin derived from a polyamide (BA) and an alkylene oxide adduct (BB) of a bisphenol compound, wherein the polyamide (BA) is derived from the below-described compound (a) and a 3-sulfoisophthalic acid alkali metal salt (b), and has carboxyl groups at the both terminals thereof.

Examples of the compound (a) constituting the polyamide (BA) which has carboxyl groups at the both terminals thereof include an aminocarboxylic acid having 6 to 12 carbon atoms, a lactam having 6 to 12 carbon atoms, and a salt between an aliphatic diamine having two primary amino groups each having 6 or more carbon atoms and an aliphatic dicarboxylic acid having 6 or more carbon atoms.

Examples of the aminocarboxylic acid having 6 to 12 carbon atoms include ω-aminocaproic acid, ω-aminoenanthic acid, ω-aminocaprylic acid, ω-aminopergonic acid, ω-aminocapric acid, 11-aminoundecanoic acid and 12-aminododecanoic acid.

Examples of the lactam having 6 to 12 carbon atoms include ε-caprolactam, enantholactam, capryllactam and laurolactam.

Examples of the salt between an aliphatic diamine having two primary amino groups each having 6 or more carbon atoms and an aliphatic dicarboxylic acid having 6 or more carbon atoms include hexamethylenediamine-adipic acid salt, hexamethylenediamine-sebacic acid salt and an hexamethylenediamine-isophthalic acid salt.

The compounds quoted above as the examples of the compound (a) may be used in combinations of two or more thereof. Among these, ε-caprolactam, 12-aminododecanoic acid and hexamethylenediamine-adipic acid salt are more preferable, and ε-caprolactam is most preferable.

Examples of the 3-sulfoisophthalic acid alkali metal salt (b) constituting the polyamide (BA) which has carboxyl groups at the both terminals thereof include sodium 3-sulfoisophthalate and potassium 3-sulfoisophthalate. Among these, sodium 3-sulfoisophthalate is most preferable.

The compound (a) is preferably used in a range from 5 to 90% by mass, as a constituent unit of the polyether ester amide copolymer resin (B2). When the used amount is less than 5% by mass, in the case where the resin (B2) is applied as a matrix resin, neither impact resistance effect nor toughness effect can be attained; when the used amount exceeds 90% by mass, the fluidity of the resin (B2) is degraded and hence it becomes difficult for the resin (B2) to be subdivided into segments.

In this connection, the 3-sulfoisophthalic acid alkali metal salt (b) is preferably used in a range from 0.5 to 20% by mass, as a constituent unit of the polyether ester amide copolymer resin (B2). When the used amount exceeds 20% by mass, the fluidity of the resin (B) is degraded and hence it becomes difficult for the resin (B) to be subdivided into segments. When the used amount is less than 0.5% by mass, in the case where the resin (B) obtained with the salt (b) is applied as a matrix resin, it becomes difficult to attain impact resistance effect or toughness effect.

On the other hand, examples of the bisphenol compound constituting the alkylene oxide adduct (BB) of a bisphenol compound include bisphenol A, bisphenol S, brominated bisphenol A, 4,4-bis(hydroxyphenyl) sulfide, bis(4-hydroxyphenyl) sulfoxide, bis(4-hydroxyphenyl)methane, bis(4-hydroxyphenyl) ether and bis(4-hydroxyphenyl)amine. Among these, bisphenol A is particularly preferable.

Examples of the alkylene oxide constituting the alkylene oxide adduct (BB) of a bisphenol compound include ethylene oxide (EO) and/or propylene oxide (PO). When EO and PO are used in combination, either random addition or polyether ester amide addition may be applied. EO is preferable.

The number of addition moles of alkylene oxide is usually 2 to 40 and preferably 10 to 30.

The number average molecular weight of the alkylene oxide adduct (BB) of a bisphenol compound is usually 300 to 5000 and preferably 700 to 3000. When the number average molecular weight exceeds 5000, the fluidity of the resin (B2) is degraded and hence it becomes difficult for the resin (B2) to be subdivided into segments. When the number average molecular weight is less than 300, it becomes difficult to develop impact resistance effect or toughness effect.

The polyether ester amide copolymer resin (B2) can be produced by the method in which the compounds (a) and (b) are reacted with each other in a molten condition to produce the polyamide (BA) which has carboxyl groups at the both terminals thereof, then the alkylene oxide adduct (BB) of a bisphenol compound is added to the produced polyamide (BA), and (BA) and (BB) are subjected to polymerization reaction at a high temperature under vacuum.

Alternatively, the polyether ester amide copolymer resin (B2) can be produced by the method in which the compounds (a) and (b), and (BB) are simultaneously fed in a reaction vessel and are allowed to react with each other under pressure at a high temperature in the presence or absence of water to produce (BA) as an intermediate, and thereafter under normal or reduced pressure, the polymerization reaction between (BA) and (BB) is allowed to proceed.

The catalyst used in the polymerization reaction between (BA) and (BB) is not limited; examples of such a catalyst include: antimony catalysts such as antimony trioxide; tin catalysts such as monobutyl tin oxide; titanium catalysts such as tetrabutyl titanate; zirconium catalysts such as tetrabutyl zirconate; and metal acetate catalysts such as zinc acetate.

Specific examples of the polyether ester amide copolymer resin (B2) applicable to the present invention may include Pelestat 6500 and Pelestat NC7530 manufactured by Sanyo Chemical Industries, Ltd.

The melt flow rate (MFR) of each of the polyether/olefin block copolymer resin (B1) and the polyether ester amide copolymer resin (B2) is usually 0.5 to 150 g/10 min and preferably 1 to 100 g/10 min. The melt flow rate can be measured in conformity with JIS K7210, according to the method described in the D condition at a temperature of 190°C with a load of 2.16 kgf when the melting point of the resin to be measured is 170°C or lower, or according to the method described in the M condition at a temperature of 230°C with a load of 2.16 kgf when the melting point of the material to be measured exceeds 170°C.

The mixing amount of the polyether/olefin block copolymer resin or polyether ester amide copolymer resin (B) is required to be 3 to 30 parts by mass in relation to 100 parts by mass of the biodegradable polyester resin (A). When the mixing amount of the resin (B) is less than 3 parts by mass, the toughness of the resin composition is not improved, and no improvement effect of the impact resistance is exhibited. When the mixing amount exceeds 30 parts by mass, the melt-kneaded, extruded strand undergoes pulsation to degrade the operability.

The resin composition of the present invention is obtained by melt-kneading the above-described biodegradable polyester resin (A) and the above-described polyether/olefin block copolymer resin or polyether ester amide copolymer resin (B), and additionally, the (meth)acrylic acid ester compound (C) and the peroxide (D). By melt-kneading these, the crosslinking degree of the biodegradable polyester resin (A) can be increased and the branching degree of the biodegradable polyester resin (A) can be regulated to make the resin composition of the present invention excellent in the moldability in extrusion foaming molding or the like.

The (meth)acrylic acid ester compound (C) is required to be a compound that has in the molecule thereof two or more (meth)acrylic groups, or alternatively one or more (meth)acrylic groups and one or more glycidyl or vinyl groups, for the purpose of being high in reactivity with the biodegradable polyester resin (A) to scarcely leave monomers, being relatively low in toxicity and suppressing the coloration of the resin. Specific examples of such a compound include glycidyl methacrylate, glycidyl acrylate, glycerol dimethacrylate, trimethylolpropane trimethacrylate, trimethylolpropane triacrylate, allyloxypolyethylene glycol monoacrylate, allyloxypolyethylene glycol monomethacrylate, polyethylene glycol dimethacrylate, polyethylene glycol diacrylate, polypropylene glycol dimethacrylate, polypropylene glycol diacrylate, polytetramethylene glycol dimethacrylate, diethylene glycol dimethacrylate, ethylene glycol dimethacrylate, alkylene copolymers in which these alkylene glycol moieties have various lengths, butanediol methacrylate and butanediol acrylate.

The mixing amount of the (meth)acrylic acid ester compound (C) is required to be 0.01 to 10 parts by mass, and is preferably 0.02 to 8 parts by mass and more preferably 0.05 to 5 parts by mass, in relation to 100 parts by mass of the biodegradable polyester resin (A). When the mixing amount is less than 0.01 part by mass, the crosslinking degree becomes insufficient, and when the mixing amount exceeds 10 parts by mass, the crosslinking degree becomes too strong and the operability is disturbed.

As the peroxide (D), an organic peroxide satisfactory in dispersibility is preferable; specific examples of the peroxide (D) include benzoyl peroxide, bis(butylperoxy)trimethylcyclohexane, bis(butylperoxy)cyclododecane, butyl bis(butylperoxy)valerate, dicumyl peroxide, butyl peroxybenzoate, dibutyl peroxide, bis(butylperoxy)diisopropylbenzene, dimethyldi(butylperoxy)hexane, dimethyldi(butylperoxy)hexyne and butylperoxycumene.

The mixing amount of the peroxide (D) is required to be 0.01 to 10 parts by mass, and is preferably 0.1 to 5 parts by mass and more preferably 0.15 to 3 parts by mass in relation to 100 parts by mass of the biodegradable polyester resin (A). When the mixing amount is less than 0.01 part by mass, the crosslinking degree becomes insufficient, and when the mixing amount exceeds 10 parts by mass, the reactivity is saturated in a manner unfavorable in terms of cost aspect.

In the biodegradable polyester resin composition of the present invention, the polyether/olefin block copolymer resin or the polyether ester amide copolymer resin (B) is preferably dispersed in island-like shapes, and more preferably dispersed finely on the order of nanosize. This is because the fine dispersion, in the resin composition, of the polyether/olefin block copolymer resin or the polyether ester amide copolymer resin (B) having hydrophilic groups prevents the segment spalling in the matrix, and the smaller the segment size, the more effectively the impact force is dispersed and absorbed. Consequently, the toughness of the resin composition is improved. Additionally, this is because the fine dispersion also improves the operability. For the purpose of finely dispersing the polyether/olefin block copolymer resin or the polyether ester amide copolymer resin (B), probably it is significantly effective to melt-knead the biodegradable polyester resin with the (meth)acrylic acid ester compound (C) having in the molecule thereof two or more (meth)acrylic groups, or alternatively one or more (meth)acrylic groups and one or more glycidyl or vinyl groups, and the peroxide (D).

In other words, the dispersion state of the resin (B) can be preferably observed with a TEM, and the resin (B) is preferably dispersed as domains of 1 µm or less in size, and the sizes of the domains are more preferably 0.01 to 0.8 µm. When the domain size is less than 0.01 µm, compatibilization occurs completely and hence the toughness is not improved. If a molded body or a molded container is dropped accidentally and such an article is damaged, the practicality is regarded as degraded, and hence the higher the toughness, the better.

In the present invention, the toughness of the biodegradable polyester resin composition and the toughness of the foamed body can be evaluated in terms of the DuPont impact resistance. In other words, according to the method described in ASTM D2794, a specimen having a predetermined size is beforehand prepared, a falling weight is allowed to fall from a certain height under the conditions of a falling weight of 300 gf and a tip R = 1/8 inch, the fracture state is visually observed, and the falling weight height (cm) causing absolutely no fracture can be adopted as an evaluation of the impact strength. In the molded body made of the resin composition of the present invention, the impact strength is preferably 20 cm or more, more preferably 25 cm or more and furthermore preferably 30 cm or more. In the foamed body of the present invention, the impact strength is preferably 10 cm or more, more preferably 15 cm or more and furthermore preferably 20 cm or more.

In the biodegradable polyester resin composition of the present invention, it is preferable to develop the strain hardening property thereof in such a way that, as shown in FIG.1, a value of 1.1 to 50 is found for the strain hardening coefficient (a2/a1) represented by the ratio between the slope a1 in the initial elongation stage linear region prior to the occurrence of a bending point and the slope a2 in the later elongation stage beyond the bending point in the double logarithmic plot of the elongation time-elongation viscosity obtained by an elongation viscosity measurement at a temperature higher by 10°C than the melting point of the resin composition. The strain hardening coefficient is more preferably 1.5 to 30. When the strain hardening coefficient is less than 1.1, sheet formation is disturbed in such a way that at the time of extrusion foaming molding, foam breaking or drawdown is caused. On the other hand, when the strain hardening coefficient exceeds 50, gel tends to occur at the time of molding and the fluidity tends to be largely decreased.

Preferably, a crystal nucleating agent, a foam nucleating agent and a foaming aid are added in the biodegradable polyester resin composition of the present invention.

The crystal nucleating agent is an agent to promote the crystallization of the biodegradable polyester resin composition, and is a factor important for maintaining the heat resistance and the dimensional stability. Examples of the crystal nucleating agent include inorganic fillers and compounds, among organic compounds, effective in crystallization promotion. Any crystal nucleating agent may be used, and these crystal nucleating agents may be used in combinations. Examples of the inorganic filler may include lamellar silicates, talc, titanium oxide and silicon oxide. Examples of such organic compounds may include erucic acid amide, ethylene-bis-stearic acid amide, citric acid, ethylene-bis-oleic acid amide, sodium 5-sulfoisophthalate and N,N'-ethylene-bis(12-hydroxystearic acid) amide.

The foam nucleating agent is effective in forming foam nuclei at the time of foaming molding and growing foam from the foam nuclei. The foaming aid is effective in uniformly dispersing the foam. Examples of the foam nucleating agent for that purpose include inorganic foam nucleating agents such as diatom earth, fired pearlite, kaolin zeolite, bentonite, clay, silica fine powder, borax, zinc borate, aluminum hydroxide, talc, glass, limestone, calcium silicate, calcium sulfate, calcium carbonate, sodium hydrogen carbonate, magnesium carbonate, aluminum oxide and ferric carbonate; and examples of the organic foam nucleating agent include organic fillers such as charcoal, cellulose, starch, citric acid and cellulose derivatives. These may be used in combinations without causing any trouble. Among these, talc has both the effect of a foam nucleating agent and the effect of a crystal nucleating agent, and talc in a form of a fine powder is most easily applicable. The addition amount of the foam nucleating agent is preferably 0.1 to 5% by mass. When the addition amount is less than 0.1% by mass, the effect as the foam nucleating agent is hardly recognizable, and when the addition amount exceeds 5% by mass, such an addition amount tends to lead to foam breaking or a decrease of the expansion ratio.

Examples of the foaming aid include fatty acid salts such as calcium stearate, magnesium stearate and aluminum stearate. The addition amount of the foaming aid is preferably 0.01 to 2% by mass. When the addition amount is less than 0.01% by mass, the effect as the foaming aid is hardly recognizable, and when the addition amount exceeds 2% by mass, the growth of the foam nuclei and the growth of the foam tend to be disturbed.

In the biodegradable polyester resin composition, as long as the properties thereof are not significantly impaired, it is possible to further add a pigment, a fragrance, a dye, a delustering agent, a heat stabilizer, an antioxidant, a plasticizer, a lubricant, a release agent, a light resistant agent, a weather resistant agent, a flame retardant, an antibacterial agent, a surfactant, a surface modifier, an antistatic agent, a filler, a terminal blocking agent and the like.

As the heat stabilizer or the antioxidant, there can be used, for example, hindered phenols, phosphorus compounds, hindered amines, sulfur compounds, copper compounds, halides of alkali metals and mixtures of these.

Examples of the inorganic filler include zinc carbonate, wallastnite, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber and carbon fiber.

Examples of the organic filler include naturally-occurring polymers such as starch, cellulose fine powder, wood powder, bean curd refuse, rice hull and bran, and modified substances of these.

Examples of the terminal blocking agent include carbodiimide compounds, oxazoline compounds and epoxy compounds.

By molding the biodegradable polyester resin composition of the present invention, molded bodies inclusive of a molded container can be obtained. As the molding method for that purpose, an injection molding method, a blow molding method, an extrusion molding method and the like can be adopted.

As the injection molding method, in addition to a common injection molding method, there can be adopted a gas injection molding method, an injection press molding method and the like. The cylinder temperature in injection molding is required to be equal to or higher than melting point Tm or the flow initiation temperature of the resin composition, and falls preferably in a range from 180 to 230°C, and more preferably in a range from 190 to 220°C. When the molding temperature is too low, molding failure or overload of the apparatus tends to occur due to the degradation of the fluidity of the resin. Conversely, when the molding temperature is too high, disadvantageously, the biodegradable polyester resin is decomposed, and the obtained molded body undergoes strength decrease, coloration or the like. On the other hand, when the die temperature is set at a temperature equal to or lower than the glass transition temperature Tg of the resin composition, the die temperature is preferably (Tg - 10°C) or lower. Alternatively, in order to promote the crystallization of the resin composition for the purpose of improving the rigidity and heat resistance, the die temperature may also be set at Tg or higher and (Tm - 30°C) or lower.

Examples of the blow molding method include a direct blow method in which molding is directly conducted from raw material chips and an injection blow molding method in which a preliminary molded body (bottomed parison) is first molded by injection molding and then the preliminary molded body is subjected to blow molding. Additionally, either of the following methods can be adopted: a hot parison method in which after molding of a preliminary molded body, successively blow molding is conducted, and a cold parison method in which a preliminary molded body is once cooled and taken out and then heated again to be subjected to blow molding.

As the extrusion molding method, a T-die method, a round die method or the like may be applied. The extrusion molding temperature is required to be equal to or higher than melting point (Tm) or the flow initiation temperature of the resin composition, and falls preferably in a range from 180 to 230°C and more preferably in a range from 190 to 220°C. When the molding temperature is too low, operation tends to be unstable or overload tends to occur. Conversely, when the molding temperature is too high, disadvantageously, the biodegradable polyester component is decomposed, and the extrusion molded body undergoes strength decrease, coloration or the like. Extrusion molding enables to produce sheets, pipes and the like.

Specific applications of the sheets or pipes obtained by an extrusion molding include original sheets for use in deep-draw molding, original sheets for use in batch foaming, cards such as credit cards, sheets laid under writing paper, transparent file holders, straws, agricultural and gardening rigid pipes and the like. Additionally, by further applying deep-draw molding such as vacuum molding, pneumatic molding or vacuum-pneumatic molding to sheets, there can be produced food containers, agricultural and gardening containers, blister pack containers, press-through pack containers and the like.

The deep-draw molding temperature and the heat treatment temperature are preferably (Tg + 20°C) to (Tg + 100°C). When the deep-drawing temperature is lower than (Tg + 20°C), deep-drawing becomes difficult, and conversely, when the deep-drawing temperature exceeds (Tg + 100°C), the biodegradable polyester component is decomposed and thus thickness unevenness and orientation disorder may be caused to decrease the impact resistance.

The forms of the food containers, agricultural and gardening containers, blister pack containers and press-through pack containers are not particularly limited, but are preferably deep-drawn as deep as 2 mm or more for the purpose of containing food, articles, chemicals and the like. The thickness of each of these containers is not particularly limited, but is preferably 50 µm or more and more preferably 150 to 500 µm from the viewpoint of strength.

Specific examples of the food containers include fresh food trays, instant food containers, fast food containers and lunchboxes. Specific examples of the agricultural and gardening containers include seedling raising pots. Specific examples of the blister pack containers include packaging containers for various commercial products such as office articles, toys and dry batteries, in addition to food.

Examples of the other molded articles produced by using the biodegradable polyester resin composition of the present invention include: table utensils such as dishes, bowls, pots, chopsticks, spoons, forks and knives; fluid containers; container caps; stationery articles such as rulers, writing materials, clear cases and CD cases; daily commodities such as sink-corner strainers, trashes, basins, toothbrushes, combs and clothes hangers; various toys such as plastic models; resin components for use in electric appliances such as air conditioner panels and various enclosures; and resin components for use in automobiles such as bumpers, instrument panels and door trims.

The forms of the fluid containers are not particularly limited, but are preferably molded as deep as 20 mm or more for the purpose of containing fluids. The thickness of each of these fluid containers is not particularly limited, but is preferably 0.1 mm or more and more preferably 0.1 to 5 mm from the viewpoint of strength. Specific examples of the fluid containers include: beverage cups and beverage bottles for dairy products, soft drinks, alcoholic beverages and the like; temporary preservation containers for seasonings such as soy sauce, sauce, mayonnaise, ketchup and edible oil; containers for shampoo, conditioners and the like; containers for cosmetics; and containers for agrichemicals.

In the biodegradable polyester resin foamed body of the present invention and the molded container obtained by molding this foamed body, the degree of crystallinity is preferably 10 to 35%. When the degree of crystallinity is less than 10%, the thermal shrinkage becomes large and the heat resistance tends to be poor. When the degree of crystallinity exceeds 35%, no problem is found from the viewpoint of the heat resistance, but the impact strength and the toughness tend to be decreased. Consequently, a more preferable range of the degree of crystallinity is from 15 to 30%.

In the foamed body of the present invention and the molded container obtained therefrom, the achievement of the degree of crystallinity of 10% or more is realizable by applying heat treatment after the production of a foam sheet or by appropriately setting the temperature conditions at the time of production of the foamed molded container. Specifically, the degree of crystallinity of 10% or more is realizable by maintaining the draw molding temperature and the die temperature at a temperature of the glass transition temperature (Tg) of the used biodegradable polyester resin + 20°C or higher and the melting point (Tm) of the used biodegradable polyester resin - 20°C or lower for a predetermined period of time and by thereafter conducting cooling to a temperature of Tg or lower. For the purpose of further promoting the crystallization of the resin, it is more preferable to set the die temperature within a range of the crystallization temperature (Tc) -20°C or higher and (Tc + 20°C) or lower. Additionally, the degree of crystallinity of 10% or more is also realizable by preliminarily heat treating, for a predetermined period of time, the biodegradable polyester resin sheet immediately before the molding at (Tg + 20°C) to (Tm - 20°C) and more preferably at (Tc - 20°C ) to (Tc + 20°C), or by heat setting, for a predetermined period of time, the container after having been molded at (Tg + 20°C) to (Tm - 20°C) and more preferably at (Tc - 20°C ) to (Tc + 20°C).

When the temperatures of these heat treatments are lower than (Tg + 20°C), the degree of crystallinity of the obtained container cannot be sufficiently increased and the heat resistance becomes insufficient. On the other hand, when the temperatures of these heat treatments exceed (Tm - 20°C), thickness unevenness and orientation disorder may be caused to decrease the impact resistance and degrade the toughness. There are also caused the problem that the viscosity decrease causes drawdown and the like problems.

The time for which the maintenance at a temperature of (Tg + 20°C) to (Tm - 20°C) is conducted depends on the crystallization speed index of the biodegradable polyester resin being used and hence cannot be specified unconditionally. However, it is preferable to maintain in the die controlled exactly at a predetermined temperature falling within the above-described range at least for 3 seconds, preferably 5 seconds and more preferably 10 seconds or more. When the maintenance time is shorter than 3 seconds, the degree of crystallinity cannot be increased sufficiently.

The biodegradable polyester resin foamed body of the present invention and the molded container using the foamed body are required to contain foam bubbles from the viewpoints of lightweightness, heat insulating property and heat retaining property. In this connection, the expansion ratio of the resin is preferably 1.2 to 50. When the expansion ratio of the resin is low, the strength is easily obtained even for thin thickness. Conversely, when the expansion ratio is 4 or more, the foamed body and the molded container come to be light in weight, and excellent in heat insulating and retaining property and vibration absorbing property. However, when the expansion ratio exceeds 50, the mechanical strength is insufficient, and the performances as a container cannot be satisfied as the case may be.

The form of the foam bubbles in foaming is not particularly limited, but is preferable of closed cell. The foam bubble size is preferably 0.001 to 2 mm and more preferably 0.01 to 2 mm. When the foam bubble size is less than 0.001 mm, the lightweightness of the container comes to be poor, and when the foam bubble size exceeds 2 mm, the strength of the container becomes insufficient and the quality grade of the container is impaired as the case may be.

For the purpose of making the biodegradable polyester resin composition contain foam bubbles, a common foaming agent can be used. The type of the foaming agent is not particularly limited; examples of the foaming agent include: inorganic inert gas foaming agents such as carbon dioxide gas, nitrogen and air; chemical thermolysis-type foaming agents such as azodicarbonamide, azobisisobutyronitrile, 4,4'-oxybisbenzenesulfonyl hydrazide, benzenesulfonyl hydrazide and sodium bicarbonate; and evaporation foaming agents such as propane, butane, pentane, hexane and alternatives for chlorofluorocarbon. These may be used as mixtures of two or more thereof.

As the method for making foam bubbles be contained in the biodegradable polyester resin composition, the foamed body and the molded container obtained from the foamed body, of the present invention, an example is a method in which a resin is foamed beforehand by using a foaming agent at an intended expansion ratio to produce a sheet or the like, and thereafter the sheet or the like is processed into a container, and another example is a method in which when the biodegradable polyester resin is processed into a container shape, a foaming agent is mixed in the resin.

As alternative forms of the biodegradable polyester resin foamed body and the molded container using this foamed body, of the present invention, also applicable are the forms in which the outer surface and/or the inner surface of each of the biodegradable polyester resin foam sheet and the molded container using this foam sheet is laminated with a layer formed of a biodegradable polyester resin and containing no foam bubbles.

In this case, the degree of crystallinity of the biodegradable polyester resin forming the layer containing no foam bubbles is also preferably 10% or more.

Examples of the layer containing no foam bubbles include common forms of films, spunbond nonwoven fabrics and sheets all containing no foam bubbles. Materials such as porous films and porous sheets are also applicable. The thickness values of these layers are preferably 5 µm or more, and more preferably 10 to 500 µm. The layers containing no foam bubbles may be colored and printed with letters and patterns.

The shape of the molded container of the present invention is not particularly limited. The opening of the container may be circular, triangular, quadrangular or polygonal. The opening may also be provided with a flange therearound. For the purpose of containing food, goods, drugs and the like, the container is preferably drawn in a depth of 2 mm or more, and the drawing ratio of the container is preferably 0.1 to 5, and more preferably 0.5 to 3. The drawing ratio of a container means the ratio (L/D) between the diameter (D) of the cross section of the container and the depth (L) of the container.

From the viewpoint of the required strength, the thickness of the container is preferably 0.3 mm or more, and more preferably 1.0 to 5.0 mm. When the thickness exceeds 5.0 mm, the container becomes bulky, heavy and additionally poor in moldability.

Next, introduced are the methods for producing the biodegradable polyester resin composition of the present invention and the foamed body obtained therefrom, and the molded container using the foamed body.

The method for producing the biodegradable polyester resin foamed body is not particularly limited, and the biodegradable polyester resin foamed body can be produced by a melt-extrusion foaming method. For that purpose, first, the biodegradable polyester resin composition is prepared. This can be prepared by a known method; for example, first, the biodegradable polyester resin (A), the polyether/olefin block copolymer resin or the polyether ester amide copolymer resin (B), the (meth)acrylic acid ester compound (C) and the peroxide (D), and further, where necessary, a foam nucleating agent and a foaming aid are prepared, and these are mixed together.

The mixing method and the mixing apparatus are not particularly limited; however, the ingredients are preferably treated by continuous metering and mixing from the viewpoints both of industry and of quality. For example, the weighed powdery peroxide (D), a weighed powdery foam nucleating agent and the like are subjected to dry blending with the chips of the resins (A) and (B), the mixture thus obtained is melt-kneaded with a single screw extruder, a double screw kneading extruder or the like, and the (meth)acrylic acid ester compound (C) can be injected from a midway location of the extruder. When the peroxide (D) is liquid, a solution of a mixture of the peroxide (D) and the (meth)acrylic acid ester compound (C) may be injected for kneading from a midway location of the extruder. At the time of melt-kneading, in addition to screw kneading, subsequent kneading with a static mixing instrument and/or a dynamic mixing machine may be carried out.

When a functional agent such as a coloring agent is added for the purpose of imparting a function to the foamed body, a master batch containing the functional agent added thereto is beforehand prepared, the master batch is mixed with other raw materials by using a metering mixing apparatus based on jet coloring or the like, and then the mixture thus obtained may be fed to an extruder. By extruding the thus melt-kneaded biodegradable polyester resin composition in a strand shape and by cutting after cooling the extruded composition to an appropriate length, the biodegradable polyester resin composition pellets can be produced.

The biodegradable polyester resin composition of the present invention may also be produced as follows: the biodegradable polyester resin (A), the (meth)acrylic acid ester compound (C), the peroxide (D) and others are melt-mixed by the above-described method, and the pellets of this mixture are once prepared, and thereafter, the pellets and the polyether/olefin block copolymer resin or the polyether ester amide copolymer resin (B) are again melt-kneaded to yield the biodegradable polyester resin composition.

The obtained pellets of the biodegradable polyester resin composition are dried, and then fed to the melt-extrusion foaming apparatus. When the pellets are fed, a lubricant, a foaming agent, a foam nucleating agent, other functional agents and the like may be dry blended. When the foaming agent is carbon dioxide gas or an evaporation foaming agent, the foaming agent is quantitatively fed from the central portion of the apparatus, dissolved and dispersed, and then a foaming discharge is carried out through a T-die, a circle die or the like. Then, this discharged foam sheet-like product is uniformly cooled, and then once taken up. The obtained sheet-like biodegradable polyester resin foamed body can be improved in heat resistance by being subjected to a heat treatment molding.

The method for producing the molded container is also not particularly limited, and there can be adopted a method in which the above-described foam sheet is subjected to draw molding or the like, such as vacuum molding, pneumatic molding or vacuum-pneumatic molding.

The foamed molded body inclusive of the foamed molded container can be produced by using the biodegradable polyester resin composition with the aid of a blow molding method typified by a direct blow molding method, an injection blow molding method and a stretch blow molding method; and a common injection molding method, a gas injection molding method and an injection press molding method. The cylinder temperature in injection molding is required to be equal to or higher than the melting point Tm or the flow initiation temperature of the biodegradable polyester resin, and preferably falls in a range from 150 to 230°C, and more preferably in a range from 160 to 220°C. The die temperature is recommended to be set at 110 ± 20°C. When the molding temperature is too low, shorts occur at the time of molding, and accordingly molding becomes unstable and overload tends to occur. Conversely, when the molding temperature is too high, disadvantageously, the biodegradable polyester resin is decomposed, and the obtained molded body undergoes strength decrease, coloration or the like.

The biodegradable polyester resin foamed body of the present invention has lightweightness and heat resistance, and is excellent in mechanical properties; and hence the application fields of the concerned foamed body include a packaging and packing field in which the concerned foamed body is useful for containers, shock absorbers in steel containers, returnable containers and partitioning plates in containers.

Additionally, the foamed body and the foamed molded body of the present invention, through the positive use of the lightweightness, heat resistance, heat insulating property, impact resistance, cushioning property and sound shielding property thereof, can be used for packaging materials, packing materials, shock-absorbing materials, heat insulating materials, heat retaining materials, refrigerants, sound muffling materials, sound absorbing materials, sound insulating materials, damping materials, building materials, cushioning materials, materials, containers and others. Specific examples of the use of the foamed body and the foamed molded body of the present invention include: couches, bed mats, chairs, bedclothes, mattresses, electric light covers, plushies, slippers, cushions, helmets, carpets, pillows, shoes, pouches, mats, crash pads, sponges, stationeries, toys, DIY articles, panels, tatami (Japanese flooring) core materials, mannequins, automobile interior materials and cushions, car seats, deadening, door trims, sun visors, automobile damping materials and sound absorbing materials, sporting mats, fitness articles, sporting protectors, flutterboards, ground fences, leisure sheets, medical mattresses, medical supplies, nursing care products, rehabilitation products, heat insulating materials for building construction, joint filling materials for building construction, architectural molding materials, architectural curing materials, reflection materials, industrial trays, tubes, pipe covers, air conditioner heat insulating pipes, gasket core materials, concrete formworks, joint materials for civil engineering, icicle prevention panels, protection materials, light weight soil, embankment, artificial soil, packing materials, packaging materials, wrappings, packing and packaging materials for fresh products, vegetables, fruits and the like, packing and shock-absorbing packaging materials for electronic devices and the like, heat-retaining and refrigerating materials for fresh products, vegetables, fruits and the like, food containers for cup ramen and lunchboxes, food trays, beverage containers, agricultural materials, foam models, diaphragms for speakers and the like.

In a stationery field in which the surface smoothness and rigidity of the foamed body and the foamed molded body of the present invention are positively used, the concerned foamed body and foamed molded body are useful for binders, cut files, cut boxes, antibacterial stationeries for clean rooms, and others.

In the field of construction and civil engineering, the concerned foamed body and foamed molded body are useful for core materials for use in partitioning, sign plates, shock absorbing wall materials, mats used in camping and others.

Further, the foamed body and the foamed molded body of the present invention have biodegradability and are capable of being recycled, and hence, are useful, in the applications to daily life commodities, as a fusuma (Japanese sliding door) paper, a shoji (Japanese sliding paper screen) paper, a wallpaper, an entrance mat, a toilet mat, a sink mat, a bath mat, a home planting mat, a mat in a hospital, a blind material, a fence for preventing trespassing of unconfined animals such as homeless dogs and cats, and the like, and are useful, in the applications to agricultural materials, as a seed bed, a seedling base case in hydroponic culture and the like.

In the field of home electric appliances, the rigidity, surface property and printability of the foamed body and the foamed molded body of the present invention are positively used, and the concerned foamed body and foamed molded body are useful for products such as cases for video cameras and cassettes; are useful, in the field of food, for fresh food packaging containers and the like, through positive use of the pollution free nature, safety, heat resistance and heat insulating property thereof; and are useful, in the field of fishing industry materials, for fishing net floats, fishing floats, oil fence floats, cool boxes and the like. Additionally, the concerned foamed body and foamed molded body may also be usable for personal computers, home electric appliances, automobile parts and the like.

Examples of the application of the molded container obtained from the biodegradable polyester resin foamed body include food containers, agricultural and gardening containers, blister pack containers and press-through pack containers. Specific examples of the food containers include trays for fresh food, containers for instant food, containers for fast food, lunch boxes and confectionery boxes. Specific examples of the agricultural and gardening containers include seedling raising pots. Specific examples of the blister pack containers include, in addition to applications to food containers, packaging containers for various groups of commodities such as office supplies, toys and dry batteries. Additionally, as the container in the present invention, containers for fluid substances are cited. Specific examples of the containers for fluid substances include: beverage cups and beverage bottles for dairy products, soft drinks, alcoholic beverages and the like; temporary preservation containers for seasonings such as soy sauce, sauce, mayonnaise, ketchup and edible oil; containers for shampoo, conditioner and the like; containers for cosmetics; containers for agrichemicals; various tanks for automobiles; printer ink cartridges; toner bottles; Indian ink containers; and paste containers.

### Examples

The present invention is described specifically on the basis of Examples. The measurements and evaluations of the various properties in the following Examples and Comparative Examples have been carried out on the basis of the following methods.

### (1) Molecular weight

The molecular weight of each sample was determined relative to polystyrene standards by analyzing at 40°C by using a gel permeation chromatography (GPC) apparatus (manufactured by Shimadzu Corp.) equipped with a differential refractive index detector, and by using tetrahydrofuran (THF) as the eluent. Samples scarcely soluble in THF were dissolved in a small amount of chloroform, and then diluted with THF to prepare measurement samples.

### (2) Glass transition temperature Tg (°C) and melting point Tm (°C)

The measurement of each sample was carried out by using a differential scanning calorimeter (DSC-7, manufactured by PerkinElmer Corp.) at a temperature increase rate of 20°C/min, according to JIS K7123.

### (3) Melt flow rate (MFR) (g/10 min)

The melt flow rate was measured in conformity with JIS K7210, according to the method described in the D condition at a temperature of 190°C with a load of 2.16 kgf when the melting point of the resin to be measured is 170°C or lower, or according to the method described in the M condition at a temperature of 230°C with a load of 2.16 kgf when the melting point of the material to be measured exceeds 170°C.

### (4) Strain hardening coefficient (a2/a1) (see FIG. 1)

The elongation viscosity was measured by using an elongation viscosity measurement apparatus (RME, manufactured by Rheometric Scientific Inc.) as follows: both ends of a 60 mm × 7 mm × 1 mm specimen were supported with metal belt clamps and the specimen underwent elongation change by being pulled at a temperature higher by 10°C than the melting point of the resin composition at a strain rate of 0.1 sec⁻¹; during the elongation change, the torque exerting on a pinch-roller was detected and thus the elongation viscosity was derived. Then, the strain hardening coefficient was obtained by deriving the ratio between the slope a1 in the initial elongation stage linear region prior to the occurrence of a bending point and the slope a2 in the later elongation stage beyond the bending point, in the double logarithmic plot of the elongation time and the elongation viscosity obtained as described above.

### (5) Crystallization speed index (min) (see FIG. 2)

A DSC apparatus (Pyrisl DSC, manufactured by PerkinElmer Corp.) was used. Each sample was heated from 20°C to 200°C at a temperature increase rate of +500°C/min, thereafter maintained at 200°C for 5 minutes, then cooled from 200°C down to 130°C at a temperature decrease rate of -500°C/min, and was crystallized at 130°C. The degree of crystallinity eventually reached was defined as 1, and the time required for the degree of crystallinity to reach 0.5 was determined as the crystallization speed index (min).

### (6) Degree of crystallinity (%)

The surface of each of the molded body specimens was subjected to a wide-angle X-ray diffraction measurement with an X-ray diffraction apparatus (RAD-rBX, manufactured by Rigaku Denki Kogyo, Co., Ltd.) on the basis of the WAXD reflection method (X-ray: Cu-Kα ray/50 kV/20 mA, scan speed: 2°/min). From the profiles obtained by the measurements, peaks were separated in the range from 2θ = 3° to 40° by means of a multiple peak separation method; and the peak area Sc of the polylactic acid crystal (200) and (011) peaks and the amorphous halo peak area Sa were obtained. The degree of crystallinity was derived as Sc/(Sc + Sa) × 100(%).

### (7) Expansion ratio

The apparent density of each obtained foamed body was derived by dividing the mass of the foamed body by the volume measured as the volume increment obtained by immersing the foamed body in water, and then the expansion ratio of the foamed body was derived by dividing the true density of the resin forming the foamed body by the apparent density of the foamed body.

### (8) Operability

By using an extrusion foaming apparatus, the operation conditions at the time of producing each foamed body and the conditions of the sheet were observed, and the operability was evaluated according to the following standards.

E(excellent): Operation can be carried out satisfactorily without any problems.

G(good): Almost no eye mucus-like matter occurs on the discharge face of the die, and operation can be conducted so as for the surface conditions of the foamed body to be satisfactory.

A(average): Eye mucus-like matter slightly occurs on the discharge face of the die, but operation is free from problems, and the surface conditions of the foamed body are satisfactory.

P(poor): Eye mucus-like matter occurs on the discharge face of the die, operation conditions are poor, and the surface conditions of the sheet are rough.

### (9) Izod impact strength (resin composition evaluation)

According to ASTM-256, a 65 mm × 12 mm × 3 mm specimen was prepared, a notch was formed thereon and the Izod impact strength thereof was measured.

### (10) DuPont impact resistance (resin composition evaluation)

According to ASTM D2794, a 50 mm × 87 mm × 2 mm specimen was prepared, a falling weight is allowed to fall from a certain height by varying the falling weight height (cm) under the conditions of a falling weight of 300 gf and a tip R = 1/8 inch; the test was conducted five times, the fracture state was visually observed every test, and the falling weight height (cm) causing absolutely no fracture was defined as the impact strength for impact resistance evaluation.

### (11) Tear strength (foamed body evaluation)

According to the tear strength test JIS K6767, five pieces of specimens of a foamed body were punched out. The thickness of the central portion of each specimen was measured, and thereafter, the specimen was mounted accurately in a tensile tester (model 2020, manufactured by Intesco Co., Ltd.), the specimen was pulled at a rate of 500 mm/min until the specimen was broken, and the tear strength (N/cm) was derived by dividing the maximum load at the time of breaking by the thickness of the specimen.

### (12) DuPont impact resistance (foamed body evaluation)

A specimen was prepared by cutting out a piece having a size of 50 mm × 87 mm from a 1.5-mm-thick foamed body, and the impact resistance thereof was evaluated according to the method described in ASTM D2794.

Specifically, by varying the falling weight height (cm) under the conditions of a falling weight of 300 gf and a tip R = 1/8 inch, the test was conducted five times, the fracture state was visually observed every test, and the falling weight height (cm) causing absolutely no fracture was defined as the impact strength for impact resistance evaluation.

### (13) Size of segment components in copolymer resin

A sample was cut in the transverse direction (TD) to reduce the thickness to half of the original thickness, immersed in a visible curing resin (epoxy embedding substance) for a few hours, and then allowed to be cured. From the cured sample, a slice was sampled. By using the slice, a photograph (magnification: 20,000) was taken in a transmission measurement, with a TEM system (JEM-1230, manufactured by JEOL Ltd.) at an acceleration voltage of 100 kV, 58 µA, and an irradiation aperture of 3. The average length of the 20 segments (island-shaped components) of the copolymer resin (B) in the photograph thus obtained was measured.

### (14) Heat resistance 1

A 20-cm long × 20-cm wide × 1.5-mm thick specimen was prepared as a sheet-shaped sample, heat treated with a hot air drying machine at a temperature of 100°C for a treatment time of 30 minutes, and was evaluated on the basis of the measurement of the shrinkage rate of the specimen and the observation of the conditions of the specimen, according to the following standards.

E(excellent): Shrinkage rate and surface conditions undergo no changes at all.

G(good): Shrinkage rate is less than 3%, and surface conditions undergo no changes.

A(average): Shrinkage rate is 3 to 10%, and the surface is rough and is deformed.

P(poor): Shrinkage rate exceeds 10%, the surface is rough and the shape undergoes deformation.

### (15) Heat resistance 2

In a container as a specimen, 50 ml of water was placed, the surface of the container was sealed with wrapping film for food packaging, the water was heated with a 500-W microwave oven for 2 minutes, the conditions of the container after heating was visually observed, and the evaluation was carried out according to the following standards.

E(excellent): No changes are found at all.
G(good): The surface is slightly rough, but no deformation is found.
A(average): Surface is rough, and slight deformation is found.

### [Raw materials]

The raw materials used in following Examples and Comparative Examples are as follows.

### Biodegradable polyester resin (A):

A-1: Polylactic acid (manufactured by NatureWorks LLC, weight average molecular weight: 125,000, MFR: 13 g/10 min, L-isomer: 99 mol%, D-isomer: 1 mol%, crystallization speed index: 92 minutes, glass transition temperature Tg: 57°C, melting point Tm: 166°C)
A-2: Polylactic acid (manufactured by NatureWorks LLC, weight average molecular weight: 110,000, MFR: 23 g/10 min, L-isomer: 95 mol%, D-isomer: 5 mol%, crystallization speed index > 100 minutes, melting point Tm: 137°C)
A-3: Polylactic acid (manufactured by NatureWorks LLC, weight average molecular weight: 180,000, MFR: 3.5 g/10 min, L-isomer: 90 mol%, D-isomer: 10 mol%, crystallization speed index > 100 minutes, melting point: not shown)
A-4: Polylactic acid (manufactured by NatureWorks LLC, weight average molecular weight: 170,000, MFR: 5.0 g/10 min, L-isomer: 80 mol%, D-isomer: 20 mol%, crystallization speed index > 100 minutes, melting point: not shown)
A-5: Polylactic acid (manufactured by NatureWorks LLC, weight average molecular weight: 100,000, MFR: 37 g/10 min, L-isomer: 99 mol%, D-isomer: 1 mol%, crystallization speed index: 90 minutes, glass transition temperature Tg: 57°C, melting point Tm: 166°C)

### Polyether/olefin block copolymer resin (By):

Pelestat 230 (manufactured by Sanyo Chemical Industries, Ltd., MFR = 10 g/10 min, melting point Tm: 160°C)

### Polyether ester amide copolymer resin (B2):

B2-1: Pelestat NC7530 (manufactured by Sanyo Chemical Industries, Ltd., MFR = 13 g/10 min, melting point = 176°C)
B2-2: Pelestat 6500 (manufactured by Sanyo Chemical Industries, Ltd., MFR = 21 g/10 min, melting point = 190°C)

### (Meth)acrylic acid ester compound (C):

PEGDM: Ethylene glycol dimethacrylate (manufactured by NOF Corp., Blemmer PDE-50)
PEGDA: Polyethylene glycol diacrylate (manufactured by NOF Corp., Blemmer ADE-200)
GM: Glycidyl methacrylate (manufactured by NOF Corp., Blemmer G)

### Peroxide (D):

D-1: Di-t-butyl peroxide
D-2: 2,5-Dimethyl-2,5-bis(t-butylperoxy)hexane (manufactured by NOF Corp., Perhexa 25B, used by dissolving in acetyl tributyl citrate that is a plasticizer to prepare 10% solution)
D-3: Powder, prepared by diluting in an inert solid, of 2,5-dimethyl-2,5-di(t-butylperoxy)hexane (manufactured by NOF Corp., Perhexa 25B-40, used by beforehand dry blending with the biodegradable polyester resin)

### Examples 1 to 3

A double screw extrusion kneader (Model PCM-45, manufactured by Ikegai Corp., melting temperature-extrusion head temperature: 200°C, screw rotation number: 150 rpm, discharge rate: 25 kg/h) was used; to 100 parts by mass of polylactic acid (A-1) as the biodegradable polyester resin (A), Pelestat 230 as the polyether/olefin block copolymer resin (B1) that is the copolymer resin (B) was added in the amount shown in Table 1 in each of Examples 1 to 3. As a foam nucleating agent, 2 parts by mass of talc (manufactured by Hayashi-Kasei Co., Ltd., average particle size: 2.5 µm) was added. From a midway location of the kneader, by using a liquid metering feed pump, PEGDM as the (meth)acrylic acid ester compound (C) and di-t-butyl peroxide (D-1) as the peroxide (D) were injected as a solution (PEGDM/(D-1) = 1/2(mass ratio), concentration: 30% by mass) dissolved in a plasticizer, acetyl tributyl citrate so as to give the amounts shown in Table 1, and the resin composition thus obtained was extruded to be processed into pellets. The thus obtained pellet-shaped resin composition was dried and the physical properties thereof were evaluated.

Further, the obtained resin composition pellets were used to be fed to a double screw kneading extruding foamed body manufacturing machine (extruding foaming machine, Model PCM-45, manufactured by Ikegai Corp.). The pellets were melted at 200°C, and 1.2% by mass of carbon dioxide gas was added under the conditions of the cooling zone set at 165°C, the screw rotation number of 75 rpm and the discharge rate of 25 kg/h; thus, a 2.0-mm-thick uniform foam sheet formed of closed cells was prepared, and the physical properties thereof were evaluated. The results thus obtained are shown in Table 1.

The foam sheet was fed to a continuous vacuum pneumatic molding machine (model FLPD-141-W, manufactured by Asano Laboratories Co., Ltd.) to mold bowl-shaped food containers (opening inner diameter = 150 mm, bottom inner diameter = 60 mm, drawing ratio (L/D) of container = 0.5) under the conditions of the preheating temperature of 250°C, the preheating time of 6 seconds, the die temperature of 110°C and the press time of 20 seconds. The physical properties of the bowl-shaped food containers were evaluated, and the results thus obtained are shown in Table 1.

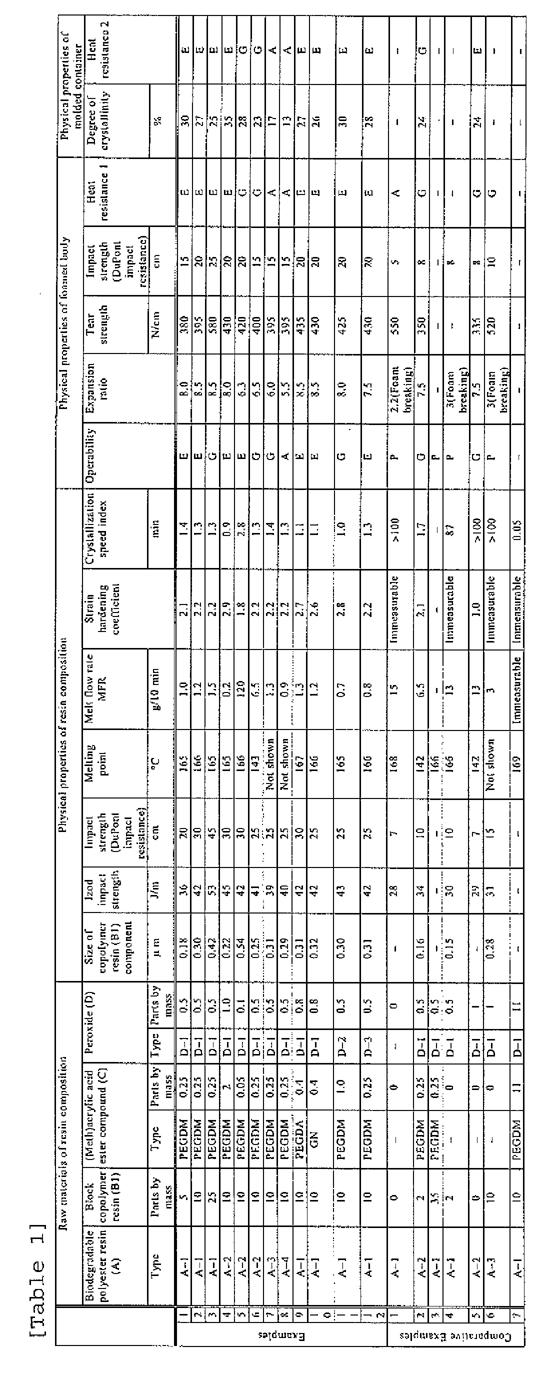

### Examples 4 to 12 and Comparative Examples 1 to 7

The biodegradable polyester resin (A), the polyether/olefin block copolymer resin (B1), the (meth)acrylic acid ester compound (C) and the peroxide (D) were respectively altered to the types and amounts shown in Table 1. Resin compositions were obtained otherwise in the same manner as in Example 1. Successively, foam sheets and molded bodies were obtained. The physical properties of the obtained resin compositions, foam sheets and molded bodies were evaluated, and the results thus obtained are shown in Table 1.

As clear from Table 1, in Examples 1 to 3, it was verified that with the increase of the content of the polyether/olefin block copolymer resin (B1), the Izod impact strength and the DuPont impact resistance of the resin composition were satisfactory, the crystallization speed was high and the elongation viscosity was also high. When these resin compositions were used for foaming, no serious operational problems were caused, and foam sheets as uniform foamed bodies formed of closed cells were obtained, and were satisfactory in the tear strength and the DuPont impact resistance. Moreover, it was verified that the molded containers using these foam sheets were high to some extent in the degree of crystallinity and were provided with heat resistance.

### Examples 4 to 8 underwent alteration of the concentration of the (meth)acrylic acid ester compound

(C) and the concentration of the peroxide (D), and alteration of the type of the biodegradable polyester resin (A); however, in any of these Examples, the crystallization speed and the elongation viscosity were high, and the Izod impact strength and the DuPont impact resistance were also high.

When these resins were used for foaming, no serious operational problems were caused, and uniform foam sheets formed of closed cells were obtained, and were satisfactory in the tear strength and the DuPont impact resistance. Moreover, the molded containers using these foam sheets were high to some extent in the degree of crystallinity and were provided with heat resistance. However, in Examples 7 and 8 to which the biodegradable polyester resins A-3 and A-4 showing no melting point were respectively applied, the heat resistance was found to be slightly decreased.

Examples 9 to 12 underwent alteration of the type and concentration of the (meth)acrylic acid ester compound (C) and the type and concentration of the peroxide (D); however, in any of these Examples, the crystallization speed and the elongation viscosity were high, and the Izod impact strength and the DuPont impact resistance were also high. When these resins were used for foaming, no serious operational problems were caused, and uniform foam sheets formed of closed cells were obtained, and were satisfactory in the tear strength and the DuPont impact resistance. Moreover, the molded containers using these sheets were high to some extent in the degree of crystallinity and were provided with heat resistance.

In Comparative Examples 1, 4 and 5, the (meth)acrylic acid ester compound (C) was not contained, and in particular, in Comparative Example 1, the peroxide (D) was also not contained; moreover, the polyether/olefin block copolymer resin (B1) was not contained or the content thereof was small; consequently, in any of Comparative Examples 1, 4 and 5, the mechanical properties typified by the Izod impact strength and the DuPont impact resistance were not satisfactory, and the strain hardening coefficient was immeasurable or low. In Comparative Examples 1 and 4, when the resins were subjected to foaming treatment, the surface of each of the obtained sheets underwent foam breaking and was rough, and thus no molded bodies were able to be obtained.

In Comparative Example 2, the (meth)acrylic acid ester compound (C) and the peroxide (D) were contained, and hence the strain hardening coefficient was high, the crystallization speed index was high, and the foaming treatment of this resin yielded a sufficiently satisfactory molded body. However, because the content of the polyether/olefin block copolymer resin (B1) was small, the mechanical properties typified by the Izod impact strength and the DuPont impact resistance were not satisfactory.

In Comparative Example 3, due to the too large content of the polyether/olefin block copolymer resin (B1), pulsation was caused at the time of discharging from the die disposed at an end of the kneader, and hence no satisfactory operation was able to be conducted, and no resin composition was able to be obtained.

In Comparative Example 6, because the (meth)acrylic acid ester compound (C) was not contained, the crystallization speed index was high, the mechanical strengths typified by the Izod impact strength and the DuPont impact resistance were not satisfactory, and the strain hardening coefficient was also immeasurable. Although an attempt to obtain a foam sheet was conducted by using this resin, foam breaking occurred and no satisfactory foam sheet was able to be obtained.

In Comparative Example 7, because the content of the (meth)acrylic acid ester compound (C) and the content of the peroxide (D) were too large, crosslinking progressed to an excessive extent, and hence clogging occurred at a midway location in the extrusion kneader and no resin composition was able to be obtained.

### Example 13

With the resin composition obtained in Example 2, an azodicarbonamide thermolysis-type foaming agent (Vinyhole AC#3, manufactured by Eiwa Chemical Industry Co., Ltd.) as a foaming agent was dry blended so as for the content thereof to be 1.5% by mass, and then a foaming test was conducted. Specifically, a single screw extrusion T-die tester of 40 mm in diameter (additionally equipped with a Sulzer static mixer with the number of stages of 3.5, slit length: 500 mm, slit width: 1.5 mm) was used, and film formation was conducted at a melting temperature of 220°C, a die exit temperature of 160°C, a screw rotation number of 16 rpm, and at a take-off speed of 3 m/min. The foaming condition at the time of the film formation was extremely uniform and a satisfactory operability was attained.

The obtained foam sheet had an expansion ratio of 4, and was found to be formed of closed cells. The tear strength of the foam sheet was 425 N/cm, the impact strength (Du Pont impact resistance) was 20 cm, and thus the foam sheet was found to be provided with toughness. Moreover, the measurement of the heat resistance 1 revealed that the foam sheet was provided with a sufficient heat resistant performance.

### Example 14

The resin composition obtained in Example 7 was freeze-pulverized to prepare particles having an average particle size of 1 mm. The particles were once dried and thereafter subjected to a batch foaming test (a pressure-resistant container was used, a butane mixed gas was impregnated at 150°C for 2 hours, and foaming was conducted at 120°C (the pressure was returned to normal pressure)) by using a n-butane/iso-butane (20/80 in mass ratio) mixed gas as a foaming agent.

The obtained foam particles were extremely uniform, had an expansion ratio of 30 and were found to be formed of closed cells.

### Examples 15 to 19

A double screw extrusion kneader (Model PCM-45, manufactured by Ikegai Corp., melting temperature-extrusion head temperature: 200°C, screw rotation number: 150 rpm, discharge rate: 25 kg/h) was used, and to 100 parts by mass of polylactic acid (A-5), 2 parts by mass of talc was added. From a midway location of the kneader, by using a liquid metering feed pump, there was injected a solution prepared by dissolving 1 part by mass of PEGDM that is the (meth)acrylic acid ester compound (C) and 2 parts by mass of the peroxide (D-1) in 7 parts by mass of acetyl tributyl citrate that is a plasticizer, wherein the injection amount was regulated so as for the MFR of the resin composition to be 2.0 g/10 min. The resin composition was melt-kneaded and extruded to be processed into a pellet shape.

The pellets thus obtained were dried. Then, 100 parts by mass of the dried pellets and 10 parts by mass of the polyether/olefin block copolymer resin (B1) (Pelestat 230) were dry blended, and fed to the double screw kneading extruding foamed body manufacturing machine (extruding foaming machine, Model PCM-45, manufactured by Ikegai Corp.). The blend was melted at 200°C, and 1.2% by mass of carbon dioxide gas was added under the conditions of the cooling zone set at 165°C and the discharge rate of 25 kg/h; and the screw rotation number was varied in Examples 15 to 19 as shown in Table 2, and thus, foam sheets were prepared. Any of the sheets thus obtained was found to be a uniform 2.0-mm-thick foam sheet formed of closed cells.

The foam sheets thus obtained were fed to a continuous vacuum pneumatic molding machine (model FLPD-141-W, manufactured by Asano Laboratories Co., Ltd.) to mold bowl-shaped food containers (opening inner diameter = 150 mm, bottom inner diameter = 60 mm, drawing ratio (L/D) of container = 0.5) under the conditions of the preheating temperature of 250°C, the preheating time of 6 seconds, the die temperature of 110°C and the press time of 20 seconds. The results thus obtained are shown in Table 2.

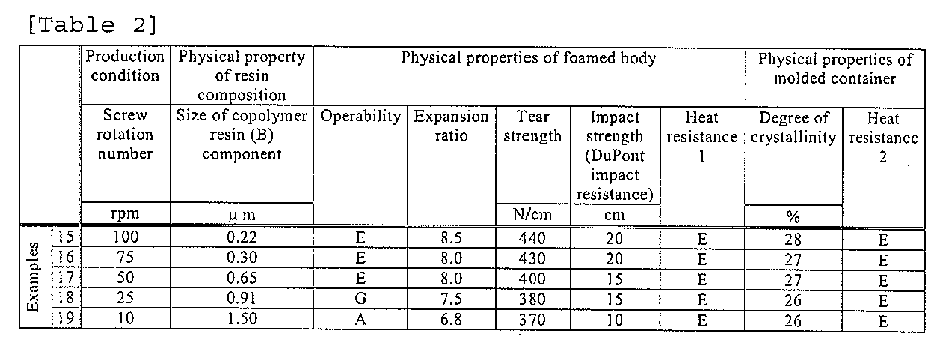

As clear from Table 2, in Examples 15 to 19, the screw rotation number was varied in the extruder at the time of the production of the foam sheet as a foamed body, and the segment size of the polyether/olefin block copolymer resin (B1) in the foam sheet was measured, and consequently it was verified that with the increase of the screw rotation number, the segment size of the polyether/olefin block copolymer resin (B1) was reduced. Also verified was a tendency that the smaller the segments, the higher the tear strength and also the higher the impact strength (DuPont impact resistance). The operability at the time of foaming was free from any serious problems, except for the case where the screw rotation number was extremely decreased. Uniform foam sheets formed of closed cells were obtained and the heat resistance was found to be improved. Moreover, it was verified that all the molded containers using these foam sheets were high to some extent in the degree of crystallinity and were provided with heat resistance.

### Examples 20 to 22

As compared to Examples 1 to 3, the copolymer resin (B) was altered to the polyether ester amide copolymer resin (B2), specifically, to Pelestat NC7530 (B2-1). Otherwise in the same manner as in Examples 1 to 3, the pellet-shaped resin compositions, the foamed sheets and the molded containers of Examples 20 to 23 were obtained. The results thus obtained are shown in Table 3.

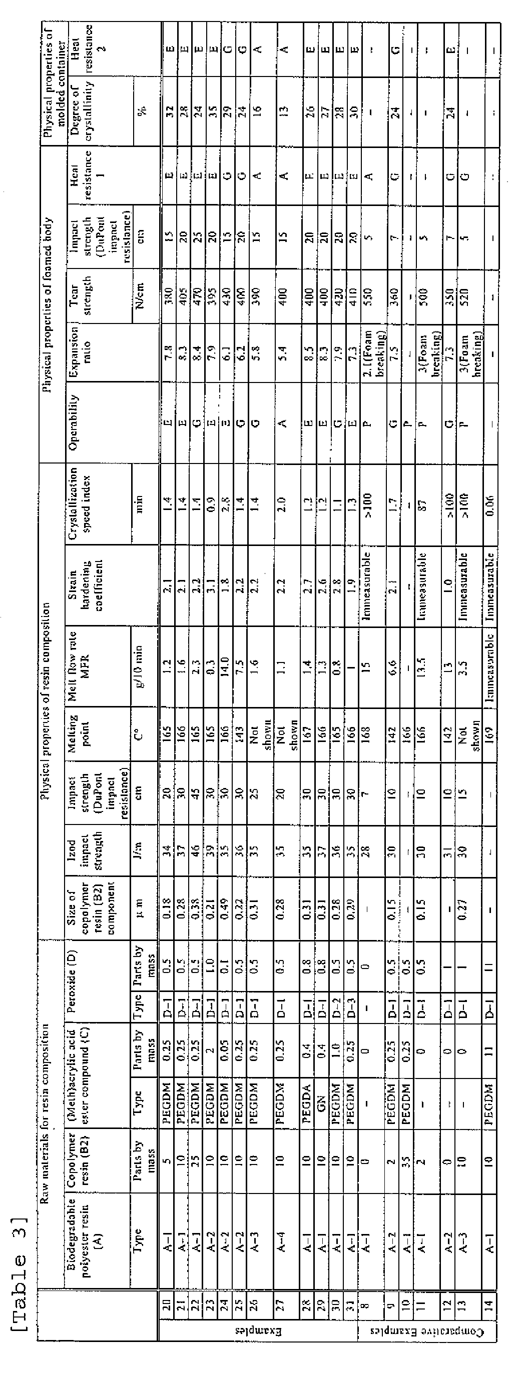

### Examples 23 to 31 and Comparative Examples 8 to 14

The biodegradable polyester resin (A), the polyether ester amide copolymer resin (B2), the (meth)acrylic acid ester compound (C) and the peroxide (D) were respectively altered to the types and amounts shown in Table 3. Resin compositions were obtained otherwise in the same manner as in Example 1. Successively, foam sheets and molded bodies were obtained. The physical properties of the obtained resin compositions, foam sheets as foamed bodies and molded bodies were evaluated, and the results thus obtained are shown in Table 3.

As clear from Table 3, in Examples 20 to 22, it was verified that with the increase of the content of the polyether ester amide copolymer resin (B2), the Izod impact strength and the DuPont impact resistance of the resin composition were improved, the crystallization speed was also improved and the elongation viscosity was also high. When these resin compositions were used for foaming, no serious operational problems were caused, and uniform foamed bodies formed of closed cells were obtained, and were satisfactory in the tear strength and the DuPont impact resistance. Moreover, it was verified that the molded containers using these foamed body sheets were high to some extent in the degree of crystallinity and were provided with heat resistance.

Examples 23 to 27 underwent alteration of the concentration of the (meth)acrylic acid ester compound (C) and the concentration of the peroxide (D), and alteration of the type of the biodegradable polyester resin (A); however, in any of these Examples, the crystallization speed and the elongation viscosity were high, and the Izod impact strength and the DuPont impact resistance were also high.

When these resins were used for foaming, no serious operational problems were caused, and foam sheets as uniform foamed bodies formed of closed cells were obtained, and were satisfactory in the tear strength and the DuPont impact resistance. Moreover, the molded containers using these foam sheets were high to some extent in the degree of crystallinity and were provided with heat resistance. However, in each of Examples 26 and 27 to which the biodegradable polyester resins A-3 and A-4 each showing no melting point were respectively applied, the heat resistance was slightly decreased.

Examples 28 to 31 underwent alteration of the type and concentration of the (meth)acrylic acid ester compound (C) and the type and concentration of the peroxide (D); however, in any of these Examples, the crystallization speed and the elongation viscosity were high, and the Izod impact strength and the DuPont impact resistance were also high. When these resins were used for foaming, no serious operational problems were caused, and uniform foam sheets formed of closed cells were obtained, and were satisfactory in the tear strength and the DuPont impact resistance. Moreover, the molded containers using these sheets were high to some extent in the degree of crystallinity and were provided with heat resistance.

In Comparative Examples 8, 11 and 12, the (meth)acrylic acid ester compound (C) was not contained, and in particular, in Comparative Example 8, the peroxide (D) was also not contained; moreover, the polyether ester amide copolymer resin (B2) was not contained or the content thereof was small; consequently, in any of Comparative Examples 8, 11 and 12, the mechanical properties typified by the Izod impact strength and the DuPont impact resistance were not satisfactory, and the strain hardening coefficient was immeasurable or low. In Comparative Examples 8 and 11, when the resins were subjected to foaming treatment, the surface of each of the obtained sheets underwent foam breaking and was rough, and thus no molded bodies were able to be obtained.

In Comparative Example 9, the (meth)acrylic acid ester compound (C) and the peroxide (D) were contained, and hence the strain hardening coefficient was high, the crystallization speed index was high, and the foaming treatment of this resin yielded a sufficiently satisfactory molded body. However, because the content of the polyether ester amide copolymer resin (B2) was small, the improvement of the mechanical properties typified by the Izod impact strength and the DuPont impact resistance was not able to be achieved.

In Comparative Example 10, due to the too large content of the polyether ester amide copolymer resin (B2), pulsation was caused at the time of discharging the polymer from the die disposed at an end of the kneader, and hence no satisfactory operation was able to be conducted, and no resin composition was able to be obtained.

In Comparative Example 13, because the (meth)acrylic acid ester compound (C) was not contained, the crystallization speed index was high, the mechanical strengths typified by the Izod impact strength and the DuPont impact resistance were not satisfactory, and the strain hardening coefficient was also immeasurable. Although an attempt to obtain a foam sheet was conducted by using this resin, foam breaking occurred and no satisfactory foam sheet was able to be obtained.

In Comparative Example 14, because the content of the (meth)acrylic acid ester compound (C) and the content of the peroxide (D) were too large, crosslinking progressed to an excessive extent, and hence clogging occurred at a midway location in the extrusion kneader and no resin composition was able to be obtained.

### Example 32

With the resin composition obtained in Example 21, in the same manner as in Example 13, an azodicarbonamide thermolysis-type foaming agent (Vinyhole AC#3, manufactured by Eiwa Chemical Industry Co., Ltd.) as a foaming agent was dry blended so as for the content thereof to be 1.5% by mass, and then a foaming test was conducted. The foaming condition at the time of the film formation was extremely uniform and a satisfactory operability was attained.

The obtained foam sheet had an expansion ratio of 4, and was found to be formed of closed cells. The tear strength of the foam sheet was 425 N/cm, the impact strength (Du Pont impact resistance) was 20 cm, and thus the foam sheet was found to be provided with toughness. Moreover, the measurement of the heat resistance 1 revealed that the foam sheet was provided with a sufficient heat resistant performance.

### Example 33

The resin composition obtained in Example 26 was freeze-pulverized to prepare particles having an average particle size of 1 mm. The particles were once dried and thereafter subjected to a batch foaming test (a pressure-resistant container was used, a butane mixed gas was impregnated at 150°C for 2 hours, and foaming was conducted at 120°C (the pressure was returned to normal pressure)) by using a n-butane/iso-butane (20/80 in mass ratio) mixed gas as a foaming agent.

The obtained foam particles were extremely uniform, had an expansion ratio of 30 and were found to be formed of closed cells.

### Examples 34 to 38

The same double screw extrusion kneader as used in Examples 15 to 19 was operated under the same conditions as in Examples 15 to 19, and to 100 parts by mass of polylactic acid (A-5), 2 parts by mass of talc was added. From a midway location of the kneader, by using a liquid metering feed pump, there was injected a solution prepared by dissolving 1 part by mass of PEGDM that is the (meth)acrylic acid ester compound (C) and 2 parts by mass of the peroxide (D-1) in 7 parts by mass of acetyl tributyl citrate that is a plasticizer, wherein the injection amount was regulated so as for the MFR of the resin composition to be 2.0 g/10 min. The resin composition was melt-kneaded and extruded to be processed into a pellet shape.

The pellets thus obtained were dried. Then, 100 parts by mass of the dried pellets and 10 parts by mass of the polyether ester amide copolymer resin (Pelestat 6500 (B-2)) were dry blended, and fed to the same double screw kneading extruding foamed body manufacturing machine as used in Examples 15 to 19. The blend was melted at 200°C, and 1.2% by mass of carbon dioxide gas was added under the conditions of the cooling zone set at 165°C and the discharge rate of 25 kg/h; and the screw rotation number was varied in Examples 34 to 38 as shown in Table 4, and thus, foam sheets were prepared. Any of the sheets thus obtained was found to be a uniform 2.0-mm-thick foam sheet formed of closed cells.

The foam sheets thus obtained were fed to the same continuous vacuum pneumatic molding machine as used in Examples 15 to 19 to mold bowl-shaped food containers having the same dimensions as in Examples 15 to 19 under the same conditions as in Examples 15 to 19. The results thus obtained are shown in Table 4.

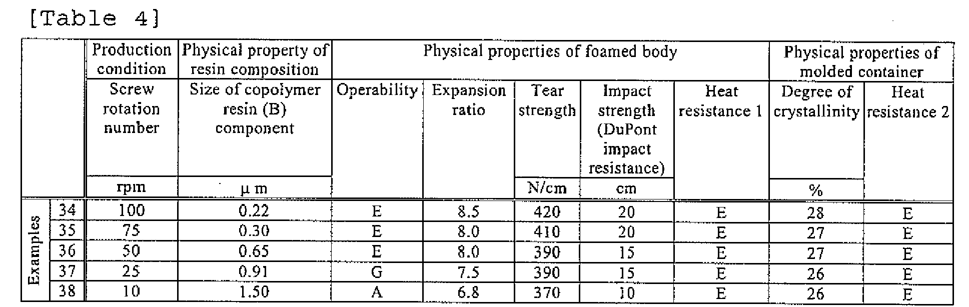

As clear from Table 4, in Examples 34 to 38, the screw rotation number was varied in the extruder at the time of the production of the foam sheet as a foamed body, and the segment size of the polyether ester amide copolymer resin (B2) in the foam sheet was measured, and consequently it was verified that with the increase of the screw rotation number, the segment size of the polyether ester amide copolymer resin (B2) was reduced. Also verified was a tendency that the smaller the segments, the higher the tear strength and also the higher the impact strength (DuPont impact resistance). The operability at the time of foaming was free from any serious problems, except for the case where the screw rotation number was extremely decreased. Uniform foamed bodies formed of closed cells were obtained and the heat resistance was found to be improved. Moreover, it was verified that all the molded containers using these sheets were high to some extent in the degree of crystallinity and were provided with heat resistance.

## Claims

1. A biodegradable polyester resin composition obtained by melt-kneading 100 parts by mass of a biodegradable polyester resin (A) containing 70 mol% or more of an α-and/or a β-hydroxycarboxylic acid unit, 3 to 30 parts by mass of a polyether/olefin block copolymer resin or a polyether ester amide copolymer resin (B), 0.01 to 10 parts by mass of a (meth)acrylic acid ester compound (C) having in a molecule thereof two or more (meth)acrylic groups, or alternatively one or more (meth)acrylic groups and one or more glycidyl or vinyl groups, and 0.01 to 10 parts by mass of a peroxide (D).

2. The biodegradable polyester resin composition according to claim 1, wherein the α- and/or the β-hydroxycarboxylic acid unit is D-lactic acid, L-lactic acid or a mixture of these.

3. The biodegradable polyester resin composition according to claim 1, wherein the polyether/olefin block copolymer resin or the polyether ester amide copolymer resin (B) is dispersed in island-like shapes and sizes thereof are less than 1 µm.

4. The biodegradable polyester resin composition according to claim 1, wherein an impact strength thereof is 20 cm or more.

5. A biodegradable polyester molded body produced by molding the biodegradable polyester resin composition according to any one of claims 1 to 4.

6. A biodegradable polyester foamed body produced by foaming molding the biodegradable polyester resin composition according to any one of claims 1 to 4.

7. The biodegradable polyester foamed body according to claim 6, wherein an impact strength thereof is 10 cm or more and a tear strength thereof is 350 N/cm or more.

8. A biodegradable polyester molded container produced by molding the biodegradable polyester foamed body according to claim 6.
